(19) Europäisches Patentamt / European Patent Office / Office européen des brevets

(11) **EP 4 011 006 B1**

(12) **EUROPEAN PATENT SPECIFICATION**

(45) Date of publication and mention
of the grant of the patent:
**31.07.2024 Bulletin 2024/31**

(21) Application number: **19752907.6**

(22) Date of filing: **13.08.2019**

(51) International Patent Classification (IPC):
**H04B 10/69** (2013.01)    **H04B 1/12** (2006.01)

(52) Cooperative Patent Classification (CPC):
**H04B 10/695; H04B 1/123; H04B 10/697**

(86) International application number:
**PCT/EP2019/071709**

(87) International publication number:
**WO 2021/028026 (18.02.2021 Gazette 2021/07)**

(54) **NOISE CANCELLING DEVICE AND METHOD FOR A RECEIVER**

VORRICHTUNG UND VERFAHREN ZUR RAUSCHUNTERDRÜCKUNG FÜR EINEN EMPFÄNGER

DISPOSITIF ET PROCÉDÉ D'ANNULATION DE BRUIT POUR UN RÉCEPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.06.2022 Bulletin 2022/24**

(73) Proprietor: **Huawei Technologies Co., Ltd.
Longgang District
Shenzhen,
Guangdong 518129 (CN)**

(72) Inventor: **STOJANOVIC, Nebojsa
80992 Munich (DE)**

(74) Representative: **Roth, Sebastian
Mitscherlich PartmbB
Patent- und Rechtsanwälte
Karlstraße 7
80333 München (DE)**

(56) References cited:
**EP-A1- 1 249 942**

- MAKRAKIS D ET AL: "DISCRIMINATOR DETECTION USING NOISE PREDICTION-CANCELLATION TECHNIQUES FOR MOBILE COMMUNICATIONS", COMMUNICATIONS - SOUND TO LIGHT. SEATTLE, JUNE 7 - 10, 1987; [INTERNATIONAL CONFERENCE ON COMMUNICATIONS], NEW YORK, IEEE, US, vol. 3, 1 June 1987 (1987-06-01), pages 1467 - 1472, XP000793522
- MAKRAKIS D ET AL: "DETECTION OF PARTIAL RESPONSE SIGNALS USING NOISE PREDICTION TECHNIQUES", IEE PROCEEDINGS I. SOLID- STATE & ELECTRON DEVICES, INSTITUTION OF ELECTRICAL ENGINEERS. STEVENAGE, GB, vol. 138, no. 3 PART 01, 1 June 1991 (1991-06-01), pages 133 - 137, XP000237256, ISSN: 0956-3776

EP 4 011 006 B1

**Description**

<u>TECHNICAL FIELD</u>

The invention is related to noise cancellation in systems using equalization to cope with strong intersymbol interference. In particular, the invention presents a noise cancelling (NC) device, a multi-stage NC device, and a NC method for a receiver.

<u>BACKGROUND</u>

Next-generation ultra-high-speed short reach optical fiber links will utilize small, cheap, and low power consumption transceivers. All these requirements are mainly imposed due to the limited space of data centers' equipment. These transceivers should support intra- and inter-data centers connections from a few hundred meters up to several tens of kilometers, respectively.

The preferred solution is to transmit 100+ Gbit/s per wavelength, which is very challenging when a very cheap solution is required. A coherent approach requires high power and expensive devices. Therefore, intensity modulation (IM) and direct detection (DD) schemes are preferred. The mature on-off keying modulation format, which is widely used in non-coherent systems, has been also investigated for applications at 100+ Gbit/s per wavelength speed. However, such a solution would require expensive high-bandwidth optics and electronics.

To overcome this drawback, advanced modulation formats supported by digital signal processing (DSP) have been investigated as an alternative technology to support 100-G, wherein the most promising candidates are duobinary pulse amplitude modulation (DB-PAM-n), discrete multi-tone modulation (DMT), and carrier-less amplitude and phase modulation (CAP). All of the aforementioned candidates provide similar performance in IM-DD systems. However, DB-PAM is more attractive, because it requires a only simple DSP.

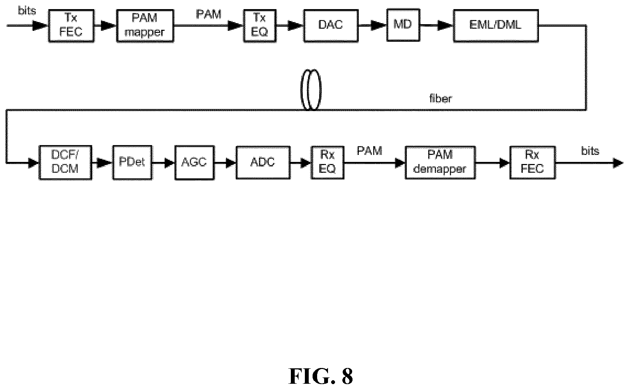

FIG. 8 shows accordingly an example of an IM-DD PAM transmission system based on an optical transceiver. Optical transceivers used for data centers typically use very cheap components, such as directly modulated lasers (DML) and electro absorption modulators (EML). DSP consumption and latency are very critical, and only basic DSP functions are implemented in real products. The power of an optical signal is almost proportional to the electrical signal that modulates the laser.

As illustrated in FIG. 8, at the transmitter side, Forward-error correction (FEC) is necessary at higher data rates. FEC codes are often standardized, but also they can be proprietary. After mapping bits from the FEC into a PAM signal, the PAM signal can be pre-equalized to improve performance. A digital-to-analog converter (DAC) then converts this to an analog electrical signal that is often amplified by a modulator driver (MD), before being provided to the EML/DML. The EML/ DML output an optical signal, which may suffer from chromatic dispersion (CD) in longer links. Therefore, in some systems dispersion compensation fibers (DCF) or dispersion compensation modules (DCM) are used to compensate for CD.

At the receiver side, a photo detector/diode (PDet) detects the transmitted optical signal. The PDet output is proportional to the optical signal power. The PDet output is amplified by using a transimpedance amplifier (TIA). The PDet and TIA can be integrated in receive optical subassemblies (ROSA), which may include an automatic gain control circuit (AGC) used to adjust the electrical signal to an analog-to-digital (ADC) input when electronic equalization is used. The ADC outputs the signal to an equalizer. The receiver can in particular use a feed-forward equalizer (FFE), a decision feed-back equalizer (DFE), a maximum likelihood sequence estimator (MLSE), or a combination of these equalizers. FFE suffers from noise enhancement, DFE from error multiplication, while MLSE represents the best and most complex solution. A PAM demapper de-maps the signal after the equalizer, and at the end usually a hard FEC is used after the PAM demapper.

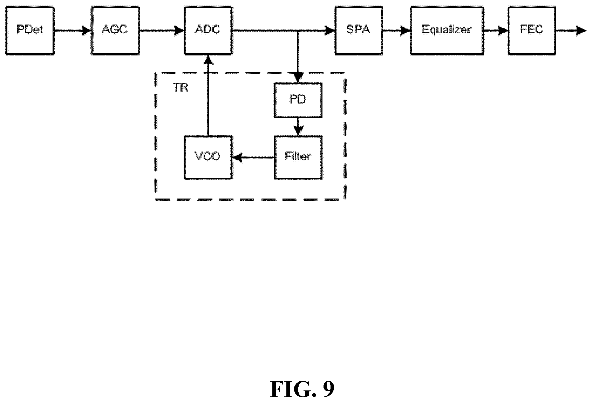

FIG. 9 shows in more detail an example of a basic receiver (Rx) block including timing recovery (TR) blocks. The AGC block monitors signal power variations, and produces an almost constant signal swing that fits into the ADC input range. In this way, the ADC can be effectively used. An equalizer then recovers a signal suffering from noise and intersymbol interference (ISI). However, before the equalizer is activated, the local oscillator must be locked to the input signal, i.e. must be locked to the transmitter oscillator responsible for the data clocking. These two oscillators must be synchronized. Small phase deviations are allowed, since it is impossible to perfectly track the transmitter clock source. Clock extraction is enabled by a phase detector (PD) that outputs information whether the sampling clock is faster or slower. Since this information is noisy, suffering from pattern-dependent noise, noise caused by amplifiers, component imperfections, etc., the timing information must be filtered before entering/controlling the receiver oscillator, which is often realized as a voltage-controlled oscillator (VCO).

Timing information can be derived from the ADC output signal. The TR block for this includes a PD, a low-pass filter, and a VCO. The VCO clock phase can be adjusted by using a sampling phase adjustment (SPA) circuit. Sampling phase optimization can be also supported by the FEC decoder, which provides a number of FEC input errors (number of corrected errors). The best sampling phase should minimize this number.

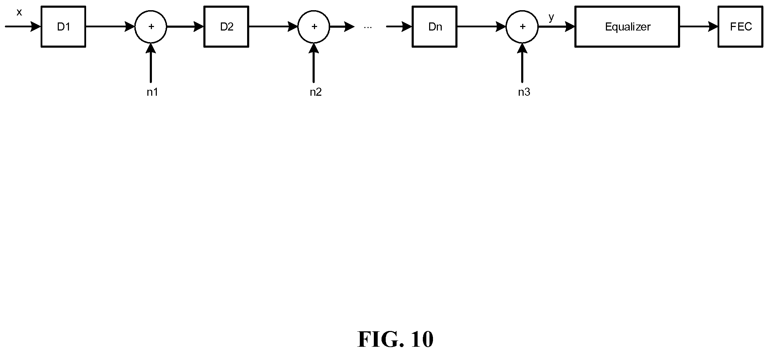

Any transmission system can be modelled as presented in Fig. 10. The transmitted signal *x* is modified by transfer functions of *n* devices D. These devices D can be DAC, modulator driver, diode etc. Each device D can be represented by a transfer function, which can be linear or nonlinear or a combination thereof. Active devices normally add noise n, which can be e.g. Gaussian. In general, noise is not Gaussian and the system is nonlinear. Often, the total transfer function can be approximated by a linear system with additive Gaussian noise. The output signal is a convolution of the signal x and the system pulse response h:

$$y(k) = \sum_{j=-n}^{n} x(k-j)h(j)$$

$$z(k) = y(k) + n(k) = \sum_{j=-n}^{n} x(k-j)h(j) + n(k)$$

In this case, linear and nonlinear equalizers can be used. A feedforward equalizer introduces noise amplification at frequencies that have low signal to noise ratios (SNR). In order to decrease this effect, noise cancellation techniques can be used.

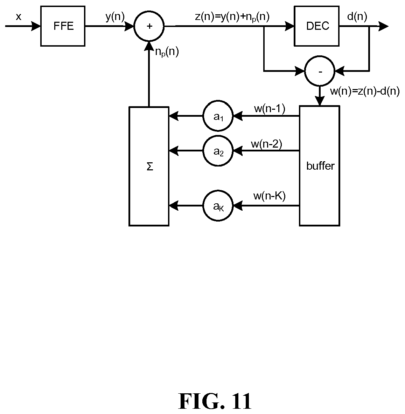

FIG. 11 shows an example of a NC block at the receiver side. The receiver uses, in particular, an equalizer to repair the signal x effected by the transmission system. The preferred equalizer is a FFE, due to low latency and complexity. In general, the equalizer can be nonlinear e.g. it can be a Volterra filter. To suppress the equalizer noise, a feedback noise canceler (FBNC) can be used. The FBNC uses previous decisions, calculates noise samples w from the previous decisions, which are filtered by a noise filter with coefficients $a_i$, *j*=1,2,...,*K*. A predicted noise sample $n_p$ calculated from the filtered noise samples *w* is then added to the signal *y,* and a new decision is made by a slicer implemented in block DEC. The coefficients *w* are calculated by an algorithm that uses autocorrelation functions and solves a set of Yule-Walker equations.

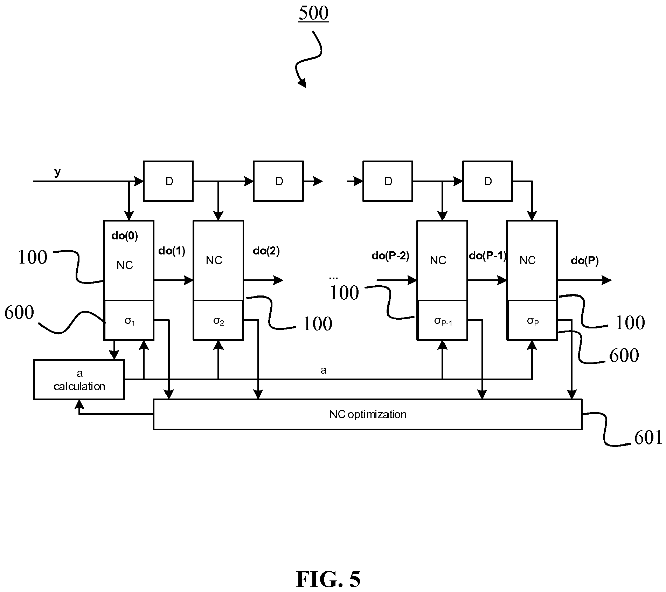

In ASIC, data are processed in parallel blocks of size *N*. The data are stored in buffers, and most blocks, such as equalizers, are done in parallel. This means that *N* equalizers work in parallel at the same time. An example of an ASIC FBNC is shown in Fig. 5. *K* decisions from the previous block must be known in advance, before processing a current block of equalized data. This is the first drawback of this architecture. It can be solved by inserting known data that requires additional redundancy (higher symbol rate). Another way to solve this problem is to increase the buffer size by *M* symbols (overlap), and to make the ASIC blocks independent, however, this increases complexity. The second drawback of this architecture is latency. Supposing that an ASIC can process only a single symbol in one ASIC clock, the total latency is equal to $N^2$. For *N*=256 the latency is 65536 symbols, which is not acceptable in many applications.

MAKRAKIS D ET AL, "DISCRIMINATOR DETECTION USING NOISE PREDICTION-CANCELLATION TECHNIQUES FOR MOBILE COMMUNICATIONS", COMMUNICATIONS - SOUND TO LIGHT. SEATTLE, JUNE 7 - 10, 1987; [INTERNATIONAL CONFERENCE ON COMMUNICATIONS], NEW YORK, IEEE, US, (19870601), vol. 3, pages 1467 - 1472, relates to symbol-by-symbol detectors for limiter-discriminator detection.

MAKRAKIS D ET AL, "DETECTION OF PARTIAL RESPONSE SIGNALS USING NOISE PREDICTION TECHNIQUES", IEE PROCEEDINGS I. SOLID- STATE & ELECTRON DEVICES, INSTITUTION OF ELECTRICAL ENGINEERS. STEVENAGE, GB, (19910601), vol. 138, no. 3 PART 01, ISSN 0956-3776, pages 133 - 137, relates to symbol-to-symbol detectors for partial response signaling systems.

EP1249942A1 relates to ingress noise reduction in a digital receiver.

SUMMARY

The invention is set out in the appended set of claims. In view of the above-mentioned drawbacks, the embodiments of the present invention aim to improve equalizer performance, and in particular NC performance. An objective is to provide a NC device and method that achieve a latency reduction in equalized systems. To this end, the NC device and method should not require any feedback connections, in order to decrease the latency in latency-critical systems. The NC device and method should further improve BER in equalized systems. In addition the NC device and method should not require training symbols and large overhead, which is common in FBNC. The complexity of the NC device and method should be low.

The objective is achieved by the embodiments of the invention as described in the enclosed independent claims. Advantageous implementations of the embodiments of the invention are further defined in the dependent claims.

A first aspect of the invention provides a NC device for a receiver, the NC device being configured to: hold a plurality of samples of a signal in a buffer, and make a decision on a modulation level of each of $N \geq 1$ samples successively arranged in the buffer, wherein the decision for a given sample of the $N$ samples is made based on the given sample, a first predicted noise sample, predicted from $K \geq 1$ other samples arranged before the given sample in the buffer, and a second predicted noise sample, predicted from $M \geq 1$ other samples arranged after the given sample in the buffer.

The NC device of the first aspect is realized in a feedforward manner, thus not feedback connections are required. Therefore, the NC device does not have to wait for previous decisions, which significantly reduces the latency. The NC device shows an improved BER in equalized systems. In addition the NC device does not require training symbols and large overhead. Finally, the NC device is not very complex. Overall, an improved NC device for equalized systems is thus provided.

In an implementation form of the first aspect, the NC device is configured to determine the first predicted noise sample based on a decision on the modulation level of each of the $K$ other samples arranged before the given sample in the buffer, and determine the second predicted noise sample based on a decision on the modulation level of each of the $M$ other samples arranged after the given sample in the buffer.

In an implementation form of the first aspect, the NC device is configured to make one or more of the decisions on the modulation levels of the other samples, and/or obtain one or more of the decisions on the modulation levels of the other samples from another NC device.

In an implementation form of the first aspect, the NC device is configured to adjust one or more threshold values, based on which the decisions on the modulation level of the other samples are made.

In an implementation form of the first aspect, the NC device is configured to calculate a noise sample for each of the other samples, and determine the first predicted noise sample based on a sum of the noise samples calculated for the $K$ other samples arranged before the given sample in the buffer, and determine the second predicted noise sample based on a sum of the noise samples calculated for the $M$ other samples arranged after the given sample in the buffer.

In an implementation form of the first aspect, the NC device is configured to calculate a noise sample for a given other sample by subtracting the given other sample from the decision on the modulation level of the given other sample.

In an implementation form of the first aspect, the NC device is configured to filter each calculated noise sample based on a filter coefficient, before calculating the sums of the noise samples.

In an implementation form of the first aspect, the NC device is configured to calculate an error of taking the decision on the modulation level of the given sample, and determine one or more coefficients for filtering the noise samples based on the calculated error and a gradient algorithm.

In an implementation form of the first aspect, the NC device is configured to adjust a threshold value, based on which the decision on the modulation level of the given sample is made.

In an implementation form of the first aspect, the NC device is configured to make the decisions on the modulation levels of the $N$ samples based on the $N$ samples belonging to a current block in the buffer, $M$ samples belonging to a next block arranged after the $N$ samples in the buffer, and $K$ samples belonging to a previous block arranged before the $N$ samples in the buffer.

In an implementation form of the first aspect, the $K$ other samples for predicting the first predicted noise sample include samples belonging to the previous block and/or samples belonging to the current block, and the $M$ other samples for predicting the second predicted noise sample include samples belonging to the next block and/or samples belonging to the current block.

A second aspect of the invention provides a multi-stage NC device, comprising a plurality of NC devices, each NC device being configured according to the first aspect or any of its implementation forms, wherein each NC device forms one of multiple stages of the multi-stage NC device.

The multi-stage NC device improves the performance in each stage. A certain number of stages can thus lead to an optimization of the NC in equalized systems.

In an implementation form of the second aspect, each NC device is configured according to an implementation form of the first aspect, the first-stage NC device is configured to make a decision on the modulation of each of the $M$ samples belonging to the next block and each of the $K$ samples belonging to the previous block, and each further-stage NC device is configured to obtain the decisions on the modulation levels of the $M$ samples belonging to the next block and of the $K$ samples belonging to the previous block from the first-stage NC device.

In an implementation form of the second aspect, the multi-stage NC device is configured to determine a noise parameter for each NC device.

In an implementation form of the second aspect, the multi-stage NC device is configured to bypass a NC device, if a deviation between the noise parameter determined for that NC device and the noise parameter determined for the preceding NC device is below a threshold value.

In an implementation form of the second aspect, the multi-stage NC device is configured to calculate one or more filter coefficients for filtering noise samples in one or more of the NC devices based on the determined noise parameters.

A third aspect of the invention provides a NC method for a receiver, the method comprising: holding a plurality of samples of a signal in a buffer, and taking a decision on a modulation level of each of $N \geq 1$ samples successively arranged in the buffer, wherein the decision for a given sample of the $N$ samples is made based on the given sample, a first predicted noise sample, predicted from $K \geq 1$ other samples arranged before the given sample in the buffer, and a second predicted noise sample, predicted from $M \geq 1$ other samples arranged after the given sample in the buffer.

In an implementation form of the third aspect, the NC method comprises determining the first predicted noise sample based on a decision on the modulation level of each of the $K$ other samples arranged before the given sample in the buffer, and determining the second predicted noise sample based on a decision on the modulation level of each of the $M$ other samples arranged after the given sample in the buffer.

In an implementation form of the third aspect, the NC method comprises taking one or more of the decisions on the modulation levels of the other samples, and/or obtaining one or more of the decisions on the modulation levels of the other samples from another NC device.

In an implementation form of the third aspect, the NC method comprises adjusting one or more threshold values, based on which the decisions on the modulation level of the other samples are made.

In an implementation form of the third aspect, the NC method comprises calculating a noise sample for each of the other samples, and determining the first predicted noise sample based on a sum of the noise samples calculated for the $K$ other samples arranged before the given sample in the buffer, and determining the second predicted noise sample based on a sum of the noise samples calculated for the $M$ other samples arranged after the given sample in the buffer.

In an implementation form of the third aspect, the NC method comprises calculating a noise sample for a given other sample by subtracting the given other sample from the decision on the modulation level of the given other sample.

In an implementation form of the third aspect, the NC method comprises filtering each calculated noise sample based on a filter coefficient, before calculating the sums of the noise samples.

In an implementation form of the third aspect, the NC method comprises calculating an error of taking the decision on the modulation level of the given sample, and determining one or more coefficients for filtering the noise samples based on the calculated error and a gradient algorithm.

In an implementation form of the third aspect, the NC method comprises adjusting a threshold value, based on which the decision on the modulation level of the given sample is made.

In an implementation form of the third aspect, the NC method comprises taking the decisions on the modulation levels of the $N$ samples based on the $N$ samples belonging to a current block in the buffer, $M$ samples belonging to a next block arranged after the $N$ samples in the buffer, and $K$ samples belonging to a previous block arranged before the $N$ samples in the buffer.

In an implementation form of the third aspect, the $K$ other samples for predicting the first predicted noise sample include samples belonging to the previous block and/or samples belonging to the current block, and the $M$ other samples for predicting the second predicted noise sample include samples belonging to the next block and/or samples belonging to the current block.

The method of the third aspect achieves all advantages of the device of the first aspect.

A fourth aspect of the invention provides a computer program which, when executed by a computer, causes the method of the third aspect or any of its implementation forms to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF THE DRAWINGS

The above described aspects and implementation forms of the present invention will be explained in the following description of specific embodiments in relation to the enclosed drawings, in which

FIG. 1     shows a NC device according to an embodiment of the invention.
FIG. 2     shows a NC device according to an embodiment of the invention.
FIG. 3     shows in (a) a single NC block of a NC device according to an embodiment of the invention, and shows in (b) a block-wise NC based on multiple NC blocks.

FIG. 4    shows a FFE calculation of filter coefficients.
FIG. 5    shows a multi-stage NC device according to an embodiment of the invention.
FIG. 6    shows a multi-stage NC device according to an embodiment of the invention.

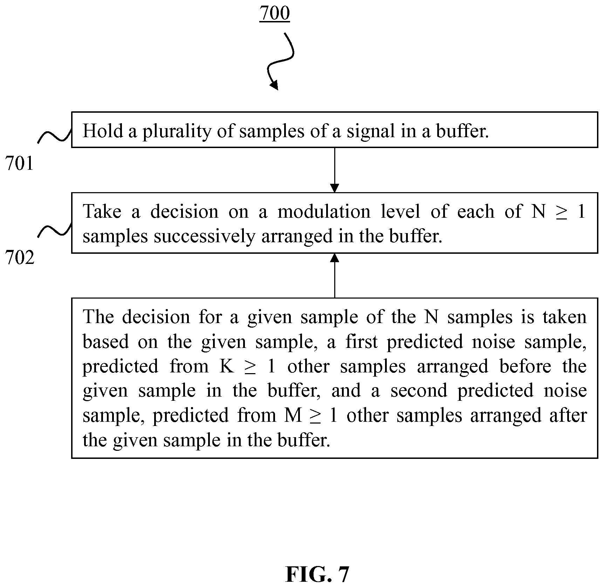

FIG. 7    shows a NC method according to an embodiment of the invention.
FIG. 8    shows an example of an IM-DD PAM transmission system.
FIG. 9    shows an example of basic Rx blocks including TR blocks.
FIG. 10   shows an example of a transmission system including n devices.
FIG. 11   shows an example of a NC block.
FIG. 12   shows an example of a FBNC ASIC implementation.

## DETAILED DESCRIPTION OF THE EMBODIMENTS

A NC device according to embodiments of the invention comprises processing circuitry configured to perform, conduct or initiate the various operations of the NC device described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multipurpose processors. In one embodiment, the processing circuitry comprises one or more processors and a non-transitory memory connected to the one or more processors. The non-transitory memory may carry executable program code which, when executed by the one or more processors, causes the NC device to perform, conduct or initiate the operations or methods described herein.

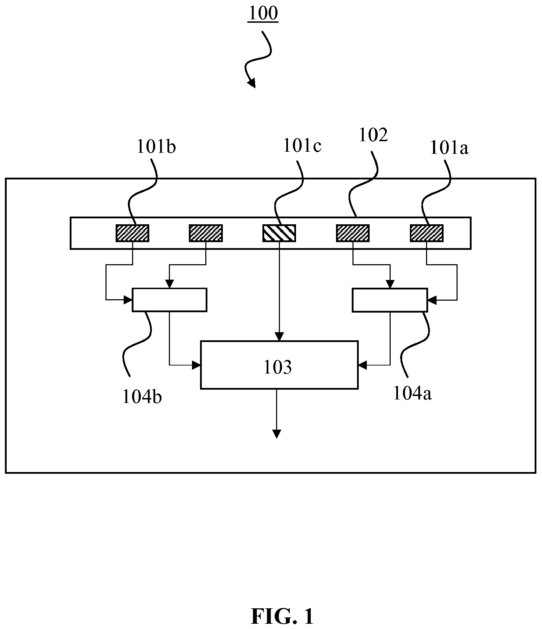

FIG. 1 shows a NC device 100 according to an embodiment of the invention. The NC device 100 is suited to be used in a receiver of a transmission system, in particular of an equalized system.

The NC device 100 is configured to hold a plurality of samples 101 of a signal in a buffer 102, i.e. the NC device 100 comprises the buffer 102. Further, the NC device 100 is configured to make a decision 103 on a modulation level of each of $N \geq 1$ samples 101, which are successively arranged in the buffer 102. This decision taking results in one (estimated) modulation level per sample 101. The $N \geq 1$ decisions 103 can be made after each other, or in parallel. Each decision 103 may be made by one NC block of the NC device.

The decision 103 for a given sample 101c, of the $N$ samples 101 in the buffer 102, is made by the NC device 100 (a given NC block) based on: the given sample 101c; a first predicted noise sample 104a, which is predicted from $K \geq 1$ other samples 101a that are arranged before the given sample 101c in the buffer 102; and a second predicted noise sample 104b, which is predicted from $M \geq 1$ other samples 101b that are arranged after the given sample 101c in the buffer 102.

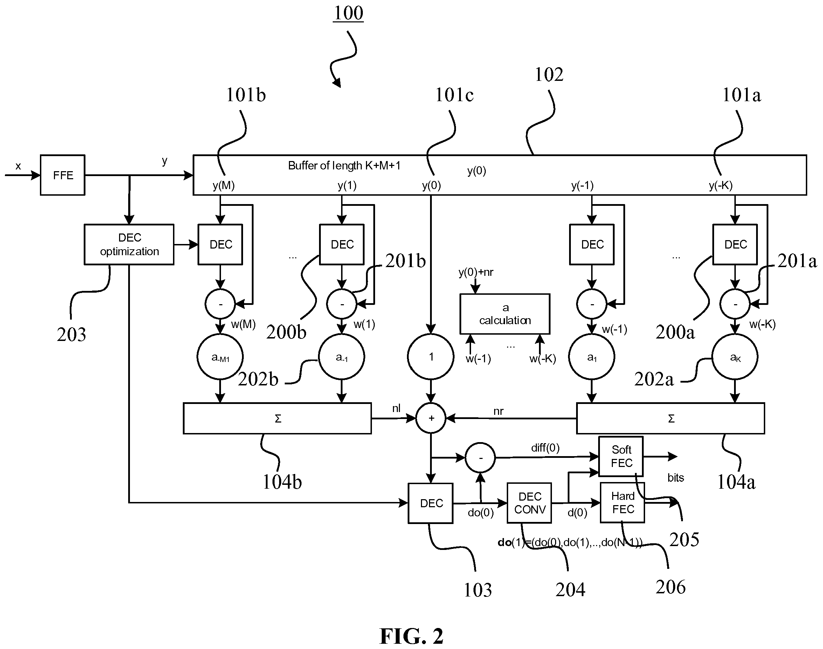

FIG. 2 shows a NC device 100 according to an embodiment of the invention, which builds on the embodiment shown in FIG. 1. That means, FIG. 2 shows more, optional, details of the NC device 100. Same elements in FIG. 2 and FIG. 1 are labelled with the same reference signs and function likewise.

In particular, FIG. 2 shows that the NC device 100 is configured to determine the first predicted noise sample 104a based on a decision 200a on the modulation level of each of the $K$ other samples 101a, which are arranged before the given sample 101c in the buffer 102. Further, the NC device 100 is likewise configured to determine the second predicted noise sample 104b, which is based on a decision 200b on the modulation level of each of the $M$ other samples 101b arranged after the given sample 101c in the buffer 102. The NC device 100 may make, itself, one or more or all of these decisions 200a and 200b. Alternatively, it may obtain one or more of these decisions 200a and 200b from another NC device 100, or - if implemented in a multi-stage NC device - from another stage. The NC device 100 may also adjust one or more threshold values, based on which the decisions 200a and 200b on the modulation levels of the other samples 101a and 101b are made. The threshold value for each decision 200a, 200b may individually be adjusted. To this end, the NC device 100 may comprise a DEC optimization block 203, which may optimize DEC blocks (i.e. blocks that make the decisions 200a and 200b). The DEC optimization block 203 may set the optimum levels and thresholds in each of these DEC blocks. In case of a PAM-N signal, for instance, where the levels $L(i)$, i=0,..,N-1 can be 0, 1, ..., N-1, the DEC optimization block 203 may provide levels $Lopt(i)= L(i)+\Delta(i)$, and may use the optimum threshold levels that can be in the middle of DEC levels.

The NC device 100 is, more particularly, configured to calculate a noise sample 201a, 201b for each of the other samples 101a, 101b. The noise samples 201a, 201b are calculated based on the above-described decisions 200a, 200b. For example, a noise sample 201a, 201b for a given other sample 101a, 101b may be calculated by subtracting the given other sample 101a, 101b from the decision 200a, 200b on the modulation level of that given other sample 101a, 101b. Then, the NC device 100 may determine the first predicted noise sample 104a based on a sum of multiple of all of the noise samples 201a calculated for the $K$ other samples 101a, which are arranged before the given sample 101c in the buffer 102. Further, the NC device 100 may determine the second predicted noise sample 104b based on a sum of multiple or all of the noise samples 201b calculated for the $M$ other samples 101b, which are arranged after the given sample 101c in the buffer 102. Further, the NC device 100 may filter each calculated noise sample 201a, 201b, for example, based on a filter coefficient 202a, 202b, before calculating these sums of the noise samples 201a, 201b.

The NC device 100 may further comprise a DEC CONV block 204, which converts Lopt levels to L levels. $\Delta(i)$ values is difference between expected value L(i) and estimated equalizer output level Lopt(i). Lopt values may be found by averaging samples around L levels. Only samples within L(i)-$\delta$ and L(i)+8 can be used to estimate level Lopt(i) where $\delta<0.5$. They may be averaged by a first order infinite impulse response (IIR) filter with a very low corner frequency. Soft FEC 205 may optionally use decisions d and diff values that improves the FEC performance. A Hard FEC 206 may also be provided.

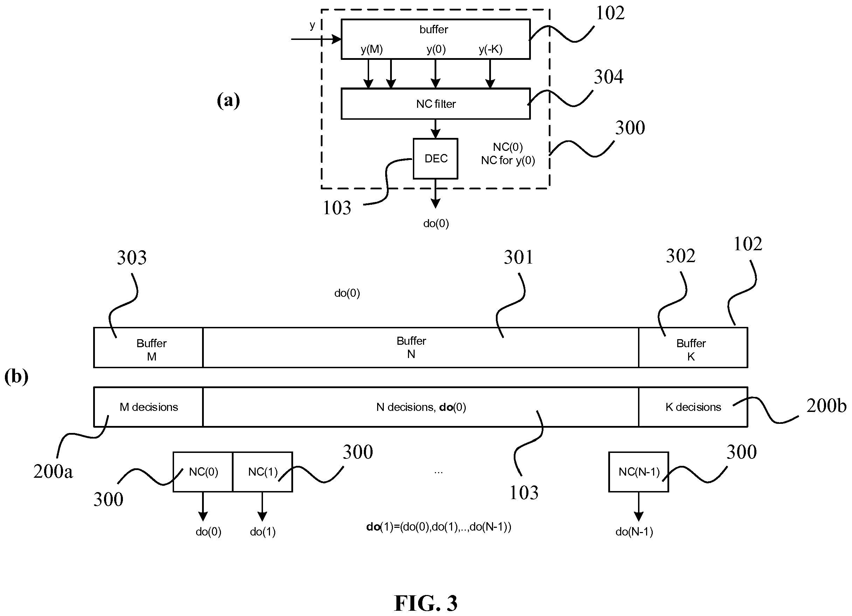

Notably, FIG. 2 shows exemplarily a specific NC block (compare also FIG. 3) of the NC device 100, which is configured to make the (improved, because taking into account the predicted noise samples 104a and 104b) decision 103 on the given sample 101c. The NC device 100, however, may include multiple such NC blocks, e.g. working in parallel, wherein each NC block of the NC device 100 is configured to make an improved decision 103 on the modulation level of another one of the samples 101 in the buffer 102 as given sample 101c. In the end, an improved decision 103 for multiple or each sample 101 in the buffer 102 may be obtained and output. Each NC block uses, for taking the decision 103, other symbol samples 101a and 101b, which are arranged before and after the considered given symbol sample 101c , respectively.

The NC block(s) of the NC device 100 do not have to wait for previous decisions to de-correlate noise after the equalizer. The NC device 100 is implemented in a pure feedforward manner. Thus, the NC device 100 achieves significant latency reduction.

FIG. 3 shows in (a) schematically a single NC block 300 of the NC device 100, which is configured to make the improved decision 103 on a given sample 101c in the buffer 102. That is, it represents single, per sample, NC. The single NC block 300 uses $K+M+1$ samples 101, filters noise (as it is shown in Fig. 2), and delivers the more reliable (i.e. improved) decision $do(0)$ (decision 103).

FIG. 3 shows further in (b) the parallel implementation of multiple such NC blocks 300 of the NC device 100, each NC block 300 configured to make the decision 103 on the modulation level of a different given sample 101c. The parallel implementation does, in particular, the same operations on a block of $N+K+M$ samples 101, in order to deliver $N$ decisions as shown in Fig. 3(b). The device 100 can buffer $N$ samples 101 of a current block 301, $K$ samples 101 of a previous block 302, and $M$ samples 101 of a next block 303 (all blocks are blocks of samples 101).

The NC device 100 can then make $N$ decisions 103 on the modulation levels of the $N$ samples 101 of the current block 301 based on; the N samples 101 belonging to the current block 301; the $M$ samples 101 belonging to the next block 303 arranged after the $N$ samples 101 of the current block 301; and the $K$ samples 101 belonging to the previous block 302 arranged before the $N$ samples 101 of the current block 301. In particular, the NC device 100 may use $K$ other samples 101a for predicting the first predicted noise sample 104a, wherein the $K$ other samples 101a include samples 101 belonging to the previous block 302 and/or samples 101 belonging to the current block 303. Further, it may use $M$ other samples 101b for predicting the second predicted noise sample 104b, wherein the $M$ other samples include samples 101 belonging to the next block 301 and/or samples 101 belonging to the current block 303.

In this way, $N$ new improved decisions that are represented by a vector **do**(1) can be obtained. Notably, in a multi-stage NC device 500 (see e.g. FIG. 5), the decisions **do**(0) are obtained on the samples 101 from the current block 301 in the first stage (and the improved over the stages). The decisions 200a and 200b on the samples 101 of the next block 301 and the previous block 302 are done only in the first stage and are then used in all stages (i.e. these decisions are not improved over the stages).

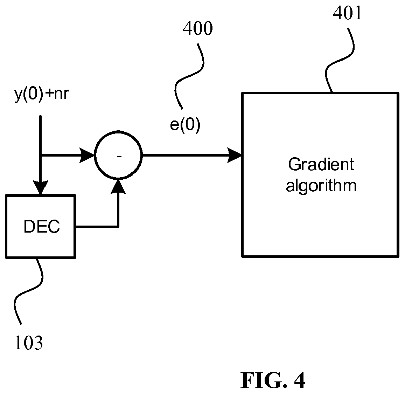

FIG. 4 shows an FFE calculation of filter coefficients, which coefficients may be used by the NC device 100 to filter the noise samples 201a and 201b as described above.

A conventional NC device uses values w to calculate autocorrelation functions, generates a set of linear equations, and solves them by using some equation solvers such as Levinson-Durbin algorithm. In contrast, the NC device 100 uses a gradient algorithm to calculate postcursor coefficients $a(j)$, $j=1.2,...,K$. The algorithm uses e.g. the signal $y(0)+nr$ (given sample 101c plus first predicted noise sample 104a) to make a decision 103, and to calculate an error 400. The coefficients $a(j)$ are updated by decision-directed least mean square algorithm (DD-LMS)

$$a(\mathrm{j})=a(\mathrm{j})-\mu \cdot e(0)w(-\mathrm{j}),\ \mathrm{j}=1,2,..,K,$$

where $\mu$ is a small value less than 1 that controls the updating speed. As this process is very slow, this circuit can work at a very low speed with negligible complexity. The coefficients $a(j)$, $j=-1,...,M$, where $K{\geq}M$ are derived based on the previously calculated coefficients. The first step is to assign values $a(-j)=a(j)$, for $j=1,...,M$. In order to save complexity $M$ can be set to a very low value e.g. $M=1$ (or even M=0) if it does not sacrifice BER seriously. This coefficients can be weighted so that it holds $a(-j) = r{\cdot}a(j)$, where $r<1$. When transfer function is linear and smooth the postcursor coefficients are important and precursor coefficients can be neglected. However, in experiments the transfer function is nonlinear and both sets of coefficients must be taken.

Generally, the NC device 100 is thus configured to calculate an error 400 of taking the decision 103 on the modulation level of the given sample 101c, and may then determine one or more coefficients 202a, 202b for filtering the noise samples 201a, 201b based on the calculated error 400 and a gradient algorithm 401.

FIG. 5 shows a multi-stage NC device 500 according to an embodiment of the invention. The multi-stage NC device 500 comprises a plurality of NC devices 100, each NC device 100 being configured according to the above description. Each NC device 100 forms one of multiple stages of the multi-stage NC device 500.

The multi-stage NC device 500 may consists of P stages 100 (see Fig. 5). Each stage 100 may improve the performance. In some cases, only a few stages 100 are necessary. In such cases, redundant stages 100 can be bypassed to save complexity and decrease latency. An NC optimization block 601 can collects noise deviation from each stage 100, and can decide what stages 100 are necessary. The block 601 may determine a noise parameter 600 ($\sigma$) for each stage 100, and may bypass a stage 100, if the noise deviation between the noise parameter 600 determined for that stage 100 and the noise parameter 600 determined for the preceding stage 100 is below a threshold value ($\delta$).

For example, if $\sigma k- \sigma k+1<\delta$, the stage K+1 will be disabled. The parameter $\delta$ depends on BER improvement required from the next stage 100. If the contribution of the stage K + I is negligible, then it will not be used. As $a(-j) = r \cdot a(j)$, the parameter r should be optimized. This parameter is varied and the NC optimization block 601 collects the noise variations. The best value r minimizes the last NC $\sigma j$. It does not mean that the gain from r will be visible immediately after NC1. This gain may be emphasized after j NC blocks. The parameter $\sigma$ may be obtained by using values diff(0) shown in FIG. 2. Decisions after each NC stage 100 are denoted by do(j), j=1,...,P.

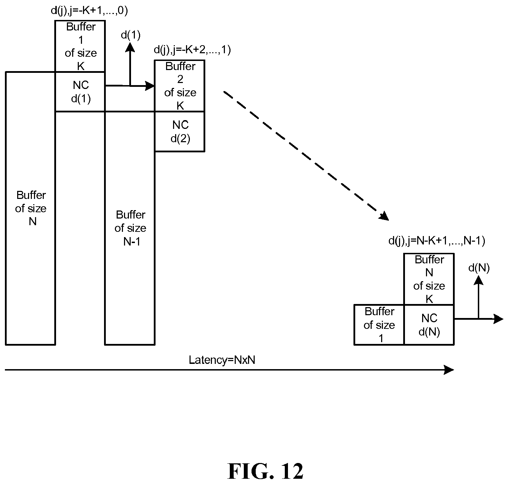

Compared to the FBNC shown in FIG. 12, the architecture of the multi-stage device 500 decreases latency significantly, as the improvement saturates after a few NC stages 100. A drawback is that the complexity is increasing linearly by increasing the number of NC stages 100. On the other hand, the overhead or large overlap is not required. Additionally, the multi-stage NC device 500 performs always better than the FBNC in practical systems suffering from strong ISI and nonlinearities. The complexity of NC optimization and calculation blocks is negligible as they are used at very low speed. For example, only one symbol per ASIC block can be used in these two blocks. D denotes ASIC block delay.

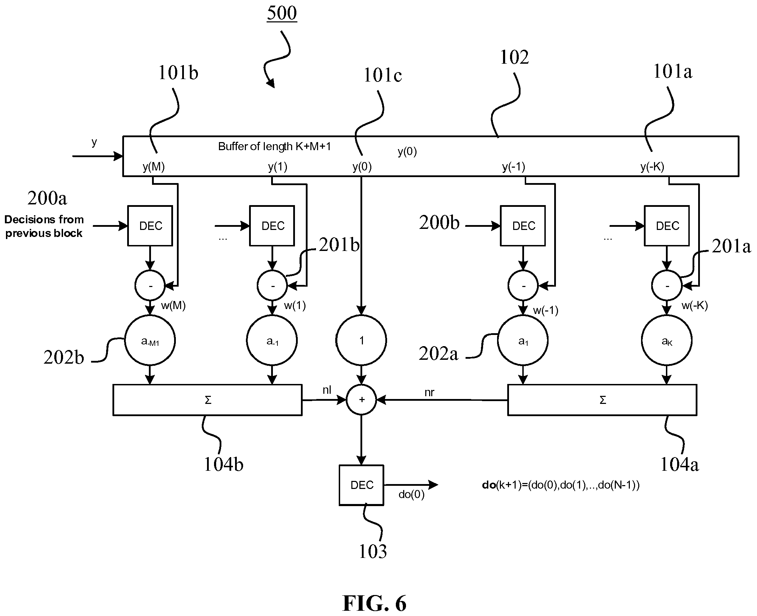

The *N* decisions 103 are improved by each new NC stage 100. The *M* decisions from the next block 302 and the *K* decisions from the previous block 301 are not improved, as already mentioned above. This will not cause any noticeable performance degradation. The upper level NC stage 100 will use *N* improved decisions 103 from the previous NC stage 100, and *M+K* old decisions 103. In the case when the neighboring symbols are not used by a NC stage 100, the decision blocks use new decisions (decisions **do**($k$) from the previous NC stage 100) as shown in FIG. 6. The first NC block uses *M* unimproved decisions from the next block 302 and *K* improved decisions from the current block 303, the second NC block uses *M*-1 unimproved decisions from the next block 302 and *M* improved decisions from the current block 303, while the last NC block uses *M* improved decisions from the current block 303 and *K* unimproved decisions from the previous block 301.

In the following the complexity and latency of the multistage NC device 500 and the FBNC are estimated and compared. It is assumed an ASIC block of N symbols, postcursor taps K, precursor taps M, P MSNC stages, and that all NC operations can be done in L=2 ASIC clock. The FBNC will have a latency of NxNxL symbols while the P-stage device 500 latency is PxNxL. So, the latency is N/P times shorter. However, the number of multiplications is 2P times larger with the device 500. On the other hand, the FBNC requires much more buffers for data and decisions, in total NxNxL. On the other hand, the device 500 requires 2PN buffers for data and decisions. Two cases are analyzed in Table 1. The device 500 can dramatically decrease the latency and improve performance. This is paid by more multipliers and decision circuits. On the other hand, the number of required buffers is significantly decreased by using the device 500. However, the FBNC requires a larger overhead or the use of pilot symbols that is not required for the device 500.

| N=128, K=3, M=3, P=3 | FBNC | Device 500 |
|---|---|---|
| Multiplications | 3x128=384 | 3x6x128=2304 |
| Buffers | 128x128=16384 | 2x3x128=768 |
| Decision circuits | 128 | 3x128=384 |
| Latency (symbols) | 128x128=16384 | 3x128=384 |
| N=128, K=2, M=0, P=2 | FBNC | Device 500 |
| Multiplications | 2x128=256 | 2x2x128=512 |
| Buffers | 128x128=16384 | 2x2x128=512 |
| Decision circuits | 128 | 2x128=256 |

(continued)

| N=128, K=2, M=0, P=2 | FBNC | Device 500 |
|---|---|---|
| Latency (symbols) | 128x128=16384 | 2x128=256 |

An algorithm performed by the device 500 can be summarized in following steps:

1. Determine threshold and decision levels. In general, decision levels are real numbers. This step is always active in dynamic and quasi-static channels.
2. Calculate postcursor NC coefficients after the first NC stage. Set precursor and postcursor coefficients.
3. Optimize precursor weighing parameter $r$.
4. Eliminate irrelevant precursor coefficients. The number of precursor coefficients is $k_1$.
5. Eliminate irrelevant postcursor coefficients. The number of postcursor coefficients is k2 $\geq$ k1.
6. Find relevant NC stages. The number of required NC stages is R. The total number of NC stages is P.
7. Bypass P-M NC stages. P-M NC stages are not used.
8. Set irrelevant precursor and postcursor multiplayer outputs to 0. Do not execute multiplications for irrelevant coefficients.
9. In dynamic channels, periodically execute steps from 2 to 6 and modify the MSNC in step 9.

The invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

The scope of the invention is in any case understood as being defined by the appended claims.

**Claims**

1. A noise cancelling, NC, device (100) for a receiver, wherein the NC device (100) is configured to:

   hold a plurality of samples (101) of a signal in a buffer (102), and
   take a decision (103) on a modulation level of each of $N \geq 1$ samples (101) successively arranged in the buffer (102), wherein the decision (103) for a given sample (101a) of the N samples (101) is taken based on

   - the given sample (101c),
   - a first predicted noise sample (104a), predicted from $K \geq 1$ other samples (101a) arranged before the given sample (101c) in the buffer (102), and
   - a second predicted noise sample (104b), predicted from $M \geq 1$ other samples (101b) arranged after the given sample (101c) in the buffer (102),

   wherein, in order to take a decision (103) for said given sample (101c), the noise cancelling device (100) is configured to:
   take one or more of the decisions (200a, 200b) on the modulation levels of the other samples (101a, 101b), and/or obtain one or more of the decisions (200a, 200b) on the modulation levels of the other samples (101a, 101b) from another NC device (100), wherein the noise cancelling device (100) is further configured to:

   calculate a noise sample (201a, 201b) for each of the other samples (101a, 101b),
   determine the first predicted noise sample (104a) based on a sum of the noise samples (201a) calculated for the K other samples (101a) arranged before the given sample (101c) in the buffer (102), and
   determine the second predicted noise sample (104b) based on a sum of the noise samples (201b) calculated for the M other samples (101b) arranged after the given sample (101c) in the buffer (102).

2. The NC device (100) according to claim 1, configured to:
   adjust one or more threshold values, based on which the decisions (200a, 200b) on the modulation level of the other samples (101a, 101b) are taken.

3. The NC device (100) according to claim 1 or 2, configured to:
calculate a noise sample (201a, 201b) for a given other sample (101a, 101b) by subtracting the given other sample (101a, 101b) from the decision (200a, 200b) on the modulation level of the given other sample (101a, 101b).

4. The NC device (100) according to any one of the preceding claims, configured to:
filter each calculated noise sample (201a, 201b) based on a filter coefficient (202a, 202b) before calculating the sums of the noise samples (201a, 201b).

5. The NC device (100) according to claim 4, configured to:

calculate an error (400) of taking the decision (103) on the modulation level of the given sample (101c), and determine one or more coefficients (202a, 202b) for filtering the noise samples (201a, 201b) based on the calculated error (400) and a gradient algorithm (401).

6. The NC device (100) according to one of the preceding claims, configured to:
adjust a threshold value, based on which the decision (103) on the modulation level of the given sample (101c) is made.

7. The NC device (100) according to one of the preceding claims, configured to:
make the decisions (103) on the modulation levels of the $N$ samples (101) based on

- the $N$ samples (101) belonging to a current block (301) in the buffer (102),
- $M$ samples (101) belonging to a next block (303) arranged after the $N$ samples (101) in the buffer (102), and

$K$ samples (101) belonging to a previous block (302) arranged before the $N$ samples (101) in the buffer (102).

8. A multi-stage NC device (500), comprising:

a plurality of NC devices (100), each NC device (100) being configured according to one of the claims 1 to 7, wherein each NC device (100) forms one of multiple stages of the multi-stage NC device (500).

9. The multi-stage NC device (500) according to claim 8, wherein:

each NC device (100) is configured according to claim 7,
the first-stage NC device (100) is configured to take a decision (200a, 200b) on the modulation of each of the $M$ samples (101) belonging to the next block (301) and each of the $K$ samples (101) belonging to the previous block (302), and
each further-stage NC device (100) is configured to obtain the decisions (200a, 200b) on the modulation levels of the $M$ samples (101) belonging to the next block (301) and of the $K$ samples (101) belonging to the previous block (302) from the first-stage NC device (100).

10. A noise cancelling method (700) for a receiver, the method (700) comprising:

holding (701) a plurality of samples (101) of a signal in a buffer (102), and
making (702) a decision (103) on a modulation level of each of $N \geq 1$ samples (101) successively arranged in the buffer (102), wherein the decision (103) for a given sample (101c) of the $N$ samples (101) is taken based on

- the given sample (101c),
- a first predicted noise sample (104a), predicted from $K \geq 1$ other samples (101a) arranged before the given sample (101c) in the buffer (102), and
- a second predicted noise sample (104b), predicted from $M \geq 1$ other samples (101b) arranged after the given sample (101c) in the buffer (102)

wherein the decision making (103) for said given sample (101c) includes the steps of:

taking one or more of the decisions (200a, 200b) on the modulation levels of the other samples (101a, 101b), and/or

obtaining one or more of the decisions (200a, 200b) on the modulation levels of the other samples (101a, 101b) from another NC device (100), wherein the noise cancelling method (700) further includes the steps of:
calculating a noise sample (201a, 201b) for each of the other samples (101a, 101b),
determining the first predicted noise sample (104a) based on a sum of the noise samples (201a) calculated for the K other samples (101a) arranged before the given sample (101c) in the buffer (102), and
determining the second predicted noise sample (104b) based on a sum of the noise samples (201b) calculated for the M other samples (101b) arranged after the given sample (101c) in the buffer (102).

**11.** A computer program which, when executed by a computer, causes the method (700) of claim 10 to be performed.

**Patentansprüche**

**1.** Vorrichtung zur Rauschunterdrückung, NC, (100) für einen Empfänger, wobei die NC-Vorrichtung (100) zu Folgendem konfiguriert ist:

Halten einer Vielzahl von Abtastwerten (101) eines Signals in einem Puffer (102) und
Treffen einer Entscheidung (103) über einen Modulationspegel von jedem von $N \geq 1$ Abtastwerten (101), die nacheinander in dem Puffer (102) angeordnet sind, wobei die Entscheidung (103) für einen gegebenen Abtastwert (101a) der $N$ Abtastwerte (101) getroffen wird basierend auf

- dem gegebenen Abtastwert (101c),
- einem ersten vorhergesagten Rauschabtastwert (104a), vorhergesagt aus $K \geq 1$ anderen Abtastwerten (101a), die vor dem gegebenen Abtastwert (101c) in dem Puffer (102) angeordnet sind, und
- einem zweiten vorhergesagten Rauschabtastwert (104b), vorhergesagt aus $M \geq 1$ anderen Abtastwerten (101b), die nach dem gegebenen Abtastwert (101c) in dem Puffer (102) angeordnet sind, wobei, um eine Entscheidung (103) für den gegebenen Abtastwert (101c) zu treffen, die Vorrichtung zur Rauschunterdrückung (100) zu Folgendem konfiguriert ist:

Treffen einer oder mehrerer der Entscheidungen (200a, 200b) über die Modulationspegel der anderen Abtastwerte (101a, 101b) und/oder
Erlangen einer oder mehrerer der Entscheidungen (200a, 200b) über die Modulationspegel der anderen Abtastwerte (101a, 101b) von einer anderen NC-Vorrichtung (100), wobei die Vorrichtung zur Rauschunterdrückung (100) ferner zu Folgendem konfiguriert ist:

Berechnen eines Rauschabtastwerts (201a, 201b) für jeden der anderen Abtastwerte (101a, 101b),
Bestimmen des ersten vorhergesagten Rauschabtastwerts (104a) basierend auf einer Summe der Rauschabtastwerte (201a), die für die $K$ anderen Abtastwerte (101a), die vor dem gegebenen Abtastwert (101c) in dem Puffer (102) angeordnet sind, berechnet wurden, und
Bestimmen des zweiten vorhergesagten Rauschabtastwerts (104b) basierend auf einer Summe der Rauschabtastwerte (201b), die für die $M$ anderen Abtastwerte (101b), die nach dem gegebenen Abtastwert (101c) in dem Puffer (102) angeordnet sind, berechnet wurden.

**2.** NC-Vorrichtung (100) nach Anspruch 1, die zu Folgendem konfiguriert ist:
Anpassen eines oder mehrerer Schwellenwerte, basierend auf denen die Entscheidungen (200a, 200b) über den Modulationspegel der anderen Abtastwerte (101a, 101b) getroffen werden.

**3.** NC-Vorrichtung (100) nach Anspruch 1 oder 2, die ferner zu Folgenden konfiguriert ist:
Berechnen eines Rauschabtastwerts (201a, 201b) für einen gegebenen anderen Abtastwert (101a, 101b) durch Subtrahieren des gegebenen anderen Abtastwerts (101a, 101b) von der Entscheidung (200a, 200b) über den Modulationspegel des gegebenen anderen Abtastwerts (101a, 101b).

**4.** NC-Vorrichtung (100) nach einem der vorhergehenden Ansprüche, die zu Folgendem konfiguriert ist:
Filtern jedes berechneten Rauschabtastwerts (201a, 201b) basierend auf einem Filterkoeffizienten (202a, 202b), bevor die Summen der Rauschabtastwerte (201a, 201b) berechnet werden.

**5.** NC-Vorrichtung (100) nach Anspruch 4, die zu Folgendem konfiguriert ist:

Berechnen eines Fehlers (400) des Treffens der Entscheidung (103) über den Modulationspegel des gegebenen Abtastwerts (101c) und

Bestimmen eines oder mehrerer Koeffizienten (202a, 202b) zum Filtern der Rauschabtastwerte (201a, 201b) basierend auf dem berechneten Fehler (400) und einem Gradientenalgorithmus (401).

6. NC-Vorrichtung (100) nach einem der vorhergehenden Ansprüche, die zu Folgendem konfiguriert ist:
Anpassen eines Schwellenwerts, auf dessen Grundlage die Entscheidung (103) über den Modulationspegel des gegebenen Abtastwerts (101c) getroffen wird.

7. NC-Vorrichtung (100) nach einem der vorhergehenden Ansprüche, die zu Folgendem konfiguriert ist:

Treffen der Entscheidungen (103) über die Modulationspegel der *N* Abtastwerte (101) basierend auf

- den *N* Abtastwerten (101), die zu einem aktuellen Block (301) in dem Puffer (102) gehören,
- *M* Abtastwerten (101), die zu einem nächsten Block (303) gehören und nach den *N* Abtastwerten (101) in dem Puffer (102) angeordnet sind, und

*K* Abtastwerten (101), die zu einem vorherigen Block (302) gehören und vor den *N* Abtastwerten (101) in dem Puffer (102) angeordnet sind.

8. Mehrstufige NC-Vorrichtung (500), umfassend:

eine Vielzahl von NC-Vorrichtungen (100), wobei jede NC-Vorrichtung (100) nach einem der Ansprüche 1 bis 7 konfiguriert ist,
wobei jede NC-Vorrichtung (100) eine von mehreren Stufen der mehrstufigen NC-Vorrichtung (500) bildet.

9. Mehrstufige NC-Vorrichtung (500) nach Anspruch 8, wobei:

jede NC-Vorrichtung (100) gemäß Anspruch 7 konfiguriert ist,
die NC-Vorrichtung (100) der ersten Stufe dazu konfiguriert ist, eine Entscheidung (200a, 200b) über die Modulation von jedem der *M* Abtastwerte (101), die zu dem nächsten Block (301) gehören, und jedem der K Abtastwerte (101), die zu dem vorherigen Block (302) gehören, zu treffen, und
jede NC-Vorrichtung (100) einer weiteren Stufe dazu konfiguriert ist, die Entscheidungen (200a, 200b) über die Modulationspegel der *M* Abtastwerte (101), die zu dem nächsten Block (301) gehören, und der *K* Abtastwerte (101), die zu dem vorherigen Block (302) gehören, von der NC-Vorrichtung(100) der ersten Stufe zu erlangen.

10. Verfahren zur Rauschunterdrückung (700) für einen Empfänger, wobei das Verfahren (700) Folgendes umfasst:

Halten (701) einer Vielzahl von Abtastwerten (101) eines Signals in einem Puffer (102), und
Treffen (702) einer Entscheidung (103) über einen Modulationspegel von jedem von $N \geq 1$ Abtastwerten (101), die nacheinander in dem Puffer (102) angeordnet sind, wobei die Entscheidung (103) für einen gegebenen Abtastwert (101c) der *N* Abtastwerte (101) getroffen wird basierend auf

- dem gegebenen Abtastwert (101c),
- einem ersten vorhergesagten Rauschabtastwert (104a), vorhergesagt aus $K \geq 1$ anderen Abtastwerten (101a), die vor dem gegebenen Abtastwert (101c) in dem Puffer (102) angeordnet sind, und
- einem zweiten vorhergesagten Rauschabtastwert (104b), vorhergesagt aus $M \geq 1$ anderen Abtastwerten (101b), die nach dem gegebenen Abtastwert (101c) in dem Puffer (102) angeordnet sind, wobei die Entscheidungsfindung (103) für den gegebenen Abtastwert (101c) die folgenden Schritte beinhaltet:

Treffen einer oder mehrerer der Entscheidungen (200a, 200b) über die Modulationspegel der anderen Abtastwerte (101a, 101b) und/oder
Erlangen einer oder mehrerer der Entscheidungen (200a, 200b) über die Modulationspegel der anderen Abtastwerte (101a, 101b) von einer anderen NC-Vorrichtung (100), wobei das Verfahren zur Rauschunterdrückung (700) ferner die folgenden Schritte beinhaltet:

Berechnen eines Rauschabtastwerts (201a, 201b) für jeden der anderen Abtastwerte (101a, 101b),
Bestimmen des ersten vorhergesagten Rauschabtastwerts (104a) basierend auf einer Summe der

Rauschabtastwerte (201a), die für die *K* anderen Abtastwerte (101a), die vor dem gegebenen Abtastwert (101c) in dem Puffer (102) angeordnet sind, berechnet wurden, und
Bestimmen des zweiten vorhergesagten Rauschabstastwerts (104b) basierend auf einer Summe der Rauschabstastwerte (201b), die für die *M* anderen Abtastwerte (101b), die nach dem gegebenen Abtastwert (101c) in dem Puffer (102) angeordnet sind, berechnet wurden.

11. Computerprogramm, das, wenn es durch einen Computer ausgeführt wird, das Durchführen des Verfahrens (700) nach Anspruch 10 veranlasst.

**Revendications**

1. Dispositif d'annulation de bruit, NC (100) pour un récepteur, dans lequel le dispositif NC (100) est configuré pour :

    conserver une pluralité d'échantillons (101) d'un signal dans une mémoire tampon (102), et
    prendre une décision (103) sur un niveau de modulation de chacun des $N \geq 1$ échantillons (101) disposés successivement dans la mémoire tampon (102), dans lequel la décision (103) pour un échantillon donné (101a) des *N* échantillons (101) est prise en fonction de

        - l'échantillon donné (101c),
        - un premier échantillon de bruit prédit (104a), prédit à partir de $K \geq 1$ autres échantillons (101a) disposés avant l'échantillon donné (101c) dans la mémoire tampon (102), et
        - un second échantillon de bruit prédit (104b), prédit à partir de $M \geq 1$ autres échantillons (101b) disposés après l'échantillon donné (101c) dans la mémoire tampon (102),

    dans lequel, afin de prendre une décision (103) pour ledit échantillon donné (101c), le dispositif d'annulation de bruit (100) est configuré pour :

        prendre une ou plusieurs des décisions (200a, 200b) sur les niveaux de modulation des autres échantillons (101a, 101b), et/ou
        obtenir une ou plusieurs des décisions (200a, 200b) sur les niveaux de modulation des autres échantillons (101a, 101b) à partir d'un autre dispositif NC (100), dans lequel le dispositif d'annulation de bruit (100) est également configuré pour :

            calculer un échantillon de bruit (201a, 201b) pour chacun des autres échantillons (101a, 101b),
            déterminer le premier échantillon de bruit prédit (104a) en fonction d'une somme des échantillons de bruit (201a) calculés pour les *K* autres échantillons (101a) disposés avant l'échantillon donné (101c) dans la mémoire tampon (102), et
            déterminer le second échantillon de bruit prédit (104b) en fonction d'une somme des échantillons de bruit (201b) calculés pour les *M* autres échantillons (101b) disposés après l'échantillon donné (101c) dans la mémoire tampon (102).

2. Dispositif NC (100) selon la revendication 1, configuré pour :
    ajuster une ou plusieurs valeurs seuil, en fonction desquelles les décisions (200a, 200b) sur le niveau de modulation des autres échantillons (101a, 101b) sont prises.

3. Dispositif NC (100) selon la revendication 1 ou 2, configuré pour :
    calculer un échantillon de bruit (201a, 201b) pour un autre échantillon donné (101a, 101b) en soustrayant l'autre échantillon donné (101a, 101b) de la décision (200a, 200b) sur le niveau de modulation de l'autre échantillon donné (101a, 101b) .

4. Dispositif NC (100) selon l'une quelconque des revendications précédentes, configuré pour :
    filtrer chaque échantillon de bruit calculé (201a, 201b) en fonction d'un coefficient de filtre (202a, 202b) avant de calculer les sommes des échantillons de bruit (201a, 201b).

5. Dispositif NC (100) selon la revendication 4, configuré pour :

    calculer une erreur (400) de prise de décision (103) sur le niveau de modulation de l'échantillon donné (101c), et

déterminer un ou plusieurs coefficients (202a, 202b) pour filtrer les échantillons de bruit (201a, 201b) en fonction de l'erreur calculée (400) et d'un algorithme de gradient (401).

**6.** Dispositif NC (100) selon l'une des revendications précédentes, configuré pour :
ajuster une valeur seuil, en fonction de laquelle la décision (103) sur le niveau de modulation de l'échantillon donné (101c) est prise.

**7.** Dispositif NC (100) selon l'une des revendications précédentes, configuré pour :

prendre les décisions (103) sur les niveaux de modulation des *N* échantillons (101) en fonction des

- *N* échantillons (101) appartenant à un bloc courant (301) dans la mémoire tampon (102),
- *M* échantillons (101) appartenant à un bloc suivant (303) disposés après les N échantillons (101) dans la mémoire tampon (102), et

K échantillons (101) appartenant à un bloc précédent (302) disposés avant les *N* échantillons (101) dans la mémoire tampon (102) .

**8.** Dispositif NC à multiples étages (500), comprenant :

une pluralité de dispositifs NC (100), chaque dispositif NC (100) étant configuré selon l'une des revendications 1 à 7,
dans lequel chaque dispositif NC (100) forme l'un des multiples étages du dispositif NC à multiples étages (500).

**9.** Dispositif NC à multiples étages (500) selon la revendication 8, dans lequel :

chaque dispositif NC (100) est configuré selon la revendication 7,
le dispositif NC de premier étage (100) est configuré pour prendre une décision (200a, 200b) sur la modulation de chacun des *M* échantillons (101) appartenant au bloc suivant (301) et de chacun des *K* échantillons (101) appartenant au bloc précédent (302), et
chaque dispositif NC d'étage supplémentaire (100) est configuré pour obtenir les décisions (200a, 200b) sur les niveaux de modulation des *M* échantillons (101) appartenant au bloc suivant (301) et des *K* échantillons (101) appartenant au bloc précédent (302) du dispositif NC de premier étage (100).

**10.** Procédé d'annulation de bruit (700) pour un récepteur, le procédé (700) comprenant :

la conservation (701) d'une pluralité d'échantillons (101) d'un signal dans une mémoire tampon (102), et
la prise (702) de décision (103) sur un niveau de modulation de chacun des $N \geq 1$ échantillons (101) disposés successivement dans la mémoire tampon (102), dans lequel la décision (103) pour un échantillon donné (101c) des *N* échantillons (101) est prise en fonction de

- l'échantillon donné (101c),
- un premier échantillon de bruit prédit (104a), prédit à partir de $K \geq 1$ autres échantillons (101a) disposés avant l'échantillon donné (101c) dans la mémoire tampon (102), et
- un second échantillon de bruit prédit (104b), prédit à partir de $M \geq 1$ autres échantillons (101b) disposés après l'échantillon donné (101c) dans la mémoire tampon (102)

dans lequel la prise de décision (103) pour ledit échantillon donné (101c) comporte les étapes consistant à :

prendre une ou plusieurs des décisions (200a, 200b) sur les niveaux de modulation des autres échantillons (101a, 101b), et/ou
obtenir une ou plusieurs des décisions (200a, 200b) sur les niveaux de modulation des autres échantillons (101a, 101b) à partir d'un autre dispositif NC (100), dans lequel le procédé d'annulation de bruit (700) comporte également les étapes consistant à :

calculer un échantillon de bruit (201a, 201b) pour chacun des autres échantillons (101a, 101b),
déterminer le premier échantillon de bruit prédit (104a) en fonction d'une somme des échantillons de bruit (201a) calculés pour les *K* autres échantillons (101a) disposés avant l'échantillon donné (101c) dans la mémoire tampon (102), et

déterminer le second échantillon de bruit prédit (104b) en fonction d'une somme des échantillons de bruit (201b) calculés pour les *M* autres échantillons (101b) disposés après l'échantillon donné (101c) dans la mémoire tampon (102).

**11.** Programme informatique qui, lorsqu'il est exécuté par un ordinateur, amène le procédé (700) selon la revendication 10 à être exécuté.

100

FIG. 1

**FIG. 2**

EP 4 011 006 B1

**(a)**

**(b)**

**FIG. 3**

FIG. 4

**FIG. 5**

**FIG. 6**

700

Hold a plurality of samples of a signal in a buffer.

Take a decision on a modulation level of each of N ≥ 1 samples successively arranged in the buffer.

The decision for a given sample of the N samples is taken based on the given sample, a first predicted noise sample, predicted from K ≥ 1 other samples arranged before the given sample in the buffer, and a second predicted noise sample, predicted from M ≥ 1 other samples arranged after the given sample in the buffer.

**FIG. 7**

FIG. 8

**FIG. 9**

**FIG. 10**

**FIG. 11**

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1249942 A1

**Non-patent literature cited in the description**

- DISCRIMINATOR DETECTION USING NOISE PREDICTION-CANCELLATION TECHNIQUES FOR MOBILE COMMUNICATIONS. **MAKRAKIS D et al.** COMMUNICATIONS - SOUND TO LIGHT. SEATTLE, JUNE 7 - 10, 1987; [INTERNATIONAL CONFERENCE ON COMMUNICATIONS], NEW YORK. IEEE, 01 June 1987, vol. 3, 1467-1472

- DETECTION OF PARTIAL RESPONSE SIGNALS USING NOISE PREDICTION TECHNIQUES. **MAKRAKIS D et al.** IEE PROCEEDINGS I. SOLID-STATE & ELECTRON DEVICES, INSTITUTION OF ELECTRICAL ENGINEERS. STEVENAGE, 01 June 1991, vol. 138, 133-137